# EUROPÄISCHE PATENTSCHRIFT

(11) **EP 0 793 805 B1**
(45) Veröffentlichungstag und Bekanntmachung des Hinweises auf die Patenterteilung: **30.11.2005**
(21) Anmeldenummer: 96907316.2
(22) Anmeldetag: 21.03.1996
(51) Int. Cl.: G01N 27/407

(54) **Gassensor**
Gas sensor
Detecteur de gaz

(30) Priorität: 30.08.1995 DE 19532090
(43) Veröffentlichungstag der Anmeldung: 10.09.1997
(73) Patentinhaber: ROBERT BOSCH GMBH, 70442 Stuttgart (DE)
(72) Erfinder: FRIESE, Karl-Hermann, D-71229 Leonberg (DE); WEYL, Helmut, D-71701 Schwieberdingen (DE); WIEDENMANN, Hans-Martin, D-70195 Stuttgart (DE); HANS, Anton, D-71640 Ludwigsburg (DE)
(86) Internationale Anmeldenummer: PCT/DE1996/000567
(87) Internationale Veröffentlichungsnummer: WO 1997/008542

(56) Entgegenhaltungen:
- EP-A- 0 398 579
- EP-A- 0 406 531
- WO-A-92/08127
- DE-A- 3 922 331
- US-A- 5 329 806

## Beschreibung

### Stand der Technik

Die Erfindung geht aus von einem Gassensor nach der Gattung des Hauptanspruchs. Ein Gassensor ist aus der DE-OS 43 18 789 bekannt, bei dem das Sensorelement in einer Längsbohrung eines Gehäuses mittels einer Dichtanordnung bestehend aus zwei Dichtkörpern und einer zwischen den Dichtkörpern angeordneten verformbaren Zusatzdichtung abgedichtet ist. Die beiden Dichtkörper bestehen aus Magnesium-Aluminium-Silikat (Steatit). Als Material für die Zusatzdichtung ist vorgepreßtes Metallpulver oder Graphit angegeben.

### Vorteile der Erfindung

Der erfindungsgemäße Gassensor mit den kennzeichnenden Merkmalen des Hauptanspruchs hat den Vorteil, daß die Dichtanordnung sowohl gasdicht als auch für Flüssigkeiten, insbesondere für Kraftstoff, undurchlässig ist und zusätzlich eine hohe Temperaturbeständigkeit aufweist.

Durch die in den Unteransprüchen aufgeführten Maßnahmen sind vorteilhafte Weiterbildungen des im Hauptanspruch angegebenen Gassensors möglich. Eine gute Handhabbarkeit bei der Montage der Dichtanordnung wird erreicht, wenn die Steatit-Dichtkörper in vorgesintertern Zustand und der Bornitrid-Dichtkörper in heißgepreßtem Zustand als Dichtringe eingesetzt werden und durch das Einwirken einer Kraft bei der Montage sich derart verformen, daß sich das Material der Dichtkörper an das Sensorelement und das Gehäuse anlegt und somit das Sensorelement im Gehäuse gasdicht gehalten wird.

### Zeichnung

Drei Ausführungsbeispiele der Erfindung sind in der Zeichnung dargestellt und in der nachfolgenden Beschreibung näher erläutert. Es zeigen Figur 1 einen Querschnitt durch einen Gassensor mit einer Dichtungsanordnung nach einem ersten Ausfeihrungsbeispiel, Figur 2 den Gassensor mit einer Dichtungsanordnung nach einem zweiten Ausführungsbeispiel und Figur 3 den Gassensor mit einer Dichtungsanordnung nach einem dritten Ausführungsbeispiel.

### Ausführungsbeispiele

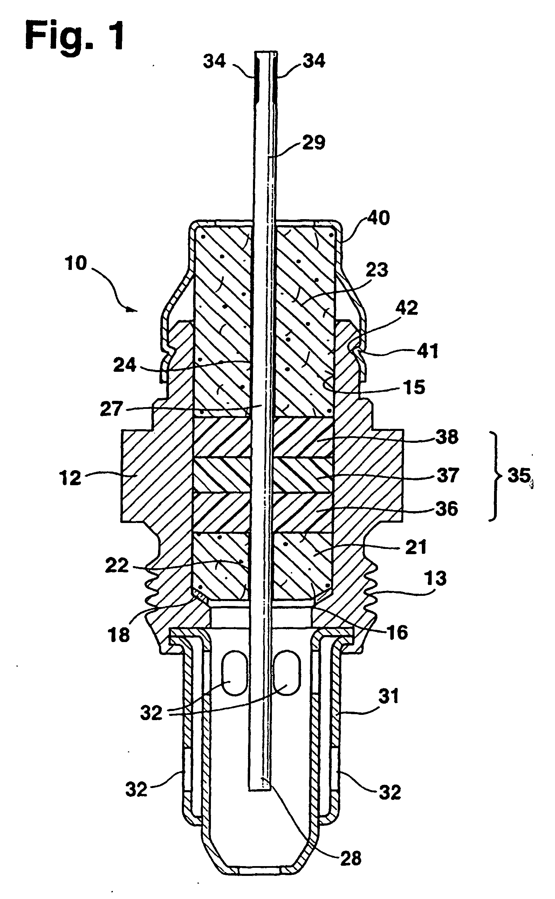

Die Figuren 1, 2 und 3 zeigen einen Gassensor 10, beispielsweise einen elektrochemischen Sauerstoffsensor, der ein metallisches Gehäuse 12 hat, das ein Gewinde 13 als Befestigungsmittel für den Einbau in ein nicht dargestelltes Meßgasrohr aufweist. Das Gehäuse 12 hat eine Längsbohrung 15 mit einer schulterförmigen Ringfläche 16. Auf der schulterförmigen Ringfläche befindet sich beispielsweise ein metallischer Dichtring 18, auf dem ein meßgasseitiges Keramikformteil 21 aufliegt. Das meßgasseitige Keramikformteil 21 hat in Richtung der Längsbohrung 15 verlaufend einen durchgehenden meßgasseitigen Durchbruch 22.

Beabstandet vom meßgasseitigen Keramikformteil 21 ist in der Längsbohrung 15 ferner ein anschlußseitiges Keramikformteil 23 angeordnet. Das anschlußseitige Keramikformteil 23 hat ebenfalls in Richtung der Längbohrung 15 verlaufend einen zentral angeordneten und durchgehenden anschlußseitigen Durchbruch 24. Der meßgasseitige Durchbruch 22 des meßgasseitigen Keramikformteils 21 und der anschlußseitige Durchbruch 24 des anschlußseitigen Keramikformteils 23 verlaufen fluchtend zueinander. In den Durchbrüchen 22, 24 befindet sich ein plättchenförmiges Sensorelement 27 mit einem meßgasseitigen Endabschnitt 28 und einem anschlußseitigen Endabschnitt 29.

Der meßgasseitige Endabschnitt 28 des Sensorelements 27 ragt aus dem Gehäuse 11 heraus und ist von einem Schutzrohr 31 umgeben, das am Gehäuse 11 festgelegt ist. Das Schutzrohr 31 weist Ein- und Austrittsöffnungen 32 für das zu messende Gas auf. Der anschlußseitige Endabschnitt 29 besitzt Anschlußkontakte 34, die ebenfalls aus dem Gehäuse 11 herausragen. Die Anschlußkontakte 34 werden mit einem nicht dargestellten mit Anschlußkabeln versehenen Kontaktstecker kontaktiert. Der aus dem Gehäuse 11 herausragende anschlußseitige Endabschnitt 29 ist von einer nicht dargestellten Umkapselung umgeben, die den Endabschnitt 29 vor Umgebungseinflüssen schützt.

Zwischen dem meßgasseitigen Keramikformteil 21 und dem anschlußseitigen Keramikformteil 23 befindet sich eine Dichtungsanordnung 35, bestehend aus einem ersten Dichtelement 36, einem zweiten Dichtelement 37 und einem dritten Dichtelement 38. Das erste Dichtelement 36 besteht aus Steatit und sitzt auf dem meßgasseitigen Keramikformteil 21 auf. Daran schließt sich das zweite Dichtelement 37 an, daß aus hexagonalem Bornitrid besteht. Über dem zweiten Dichtelement 37 befindet sich das dritte Dichtelement 38, daß ebenfalls aus Steatit besteht. Auf das dritte Dichtelement 38 drückt das anschlußseitige Keramikformteil 23. Die Anpreßkraft des anschlußseitigen Keramikformteil 23 wird von einer Metallhülse 40 aufgebracht. Die Metallhülse 40 hat beispielsweise gleichmäßig verteilt mehrere, nach innen weisende Krallen 41, die in am Gehäuse 12 eingeformten Einkerbungen 42 eingreifen. Es ist aber auch denkbar, die Metallhülse 40 mit dem Gehäuse 12 zu verschweißen.

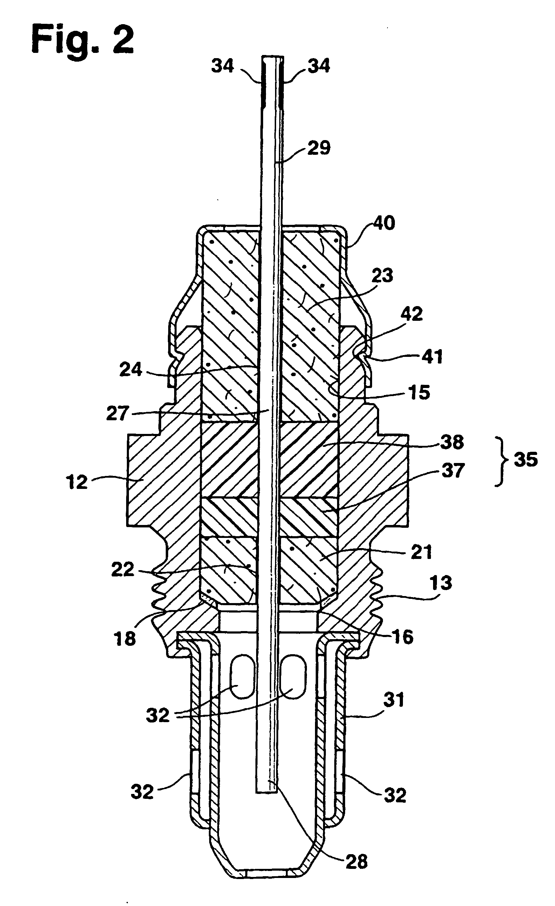

Ein zweites Ausführungsbeispiel geht aus Figur 2 hervor. Bei diesem Ausführungsbeispiel besteht die Dichtungsanordnung 35 lediglich aus dem zweiten Dichtelement 37 und dem dritten Dichtelement 38. Das aus Bornitrid bestehende zweite Dichtelement 37 liegt direkt auf dem meßgasseitigen Keramikformteil 21 auf.

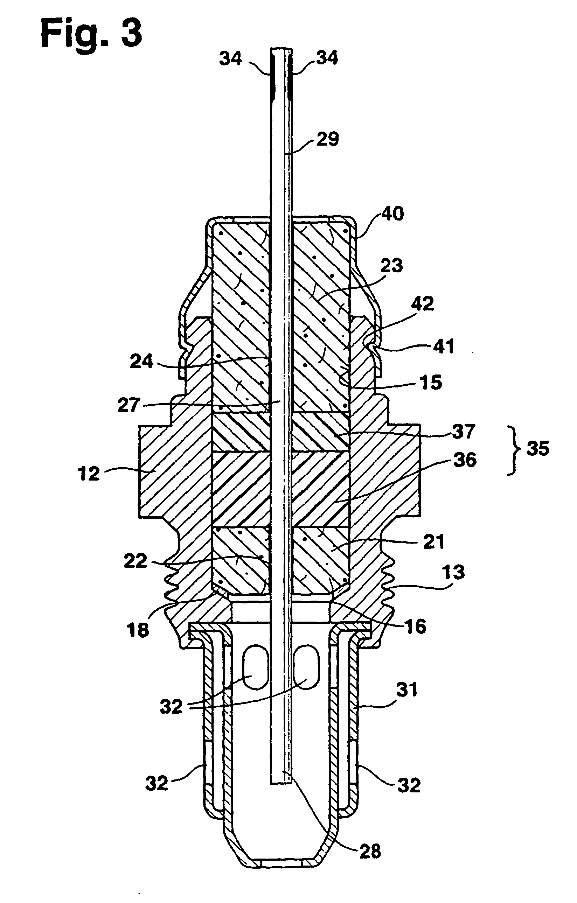

Bei einem dritten Ausführungsbeispiel gemäß Figur 3 besteht die Dichtungsanordnung 35 aus dem ersten Dichtelement 36 und dem zweiten Dichtelement 37. Hier drückt das anschlußseitige Keramikformteil 23 direkt auf das zweite Dichtelement 37 aus Bornitrid.

Als zweckmäßig hat sich herausgestellt, daß das Volumen der aus Steatit bestehenden Dichtelemente 36, 38 etwa doppelt so groß ist als das Volumen des aus Bornitrid bestehende Dichtelements 37. Dies führt dazu, daß bei dem Ausführungsbeispiel gemäß Figur 1 die Dicke der Dichtelemente 36, 37, 38 etwa gleich groß ist. Bei den beiden Ausführungsbeispielen gemäß Figur 2 und 3 ist dagegen das erste Dichtelement 36 beziehungsweise das dritte Dichtelement 38 etwa doppelt so dick ausgeführt als das zweite, aus Bornitrid bestehende Dichtelement 37.

Die aus Steatit bestehenden Dichtelemente 36, 38 werden vor dem Einbau in die Längsbohrung 15 des Gehäuses 12 durch Sintern bei einer niedrigen Temperatur von beispielsweise 500° C zu Ringen vorgeformt. Das aus hexagonalem Bornitrid bestehende zweite Dichtelement 37 wird dagegen bei ca. 2000° C heißgepreßt. Die so gebildeten ringförmigen Dichtelemente 36, 37, 38 werden gemäß dem entsprechenden Ausführungsbeispielen in die das Sensorelement 27 bereits enthaltende Längsbohrung 15 eingesetzt. Über der entsprechend ausgeführten Dichtungsanordnung 35 wird dann das anschlußseitige Keramikformteil 23 angeordnet. Danach wird auf das anschlußseitige Keramikformteil die Metallhülse 40 aufgesetzt. Anschließend wird beispielsweise mittels eines Stempels eine Kraft auf die Metallhülse 40 ausgeübt, die über das anschlußseitige Keramikformteil 23 auf die Dichtelemente 36, 37, 38 der Dichtungsanordnung 35 einwirkt. Dabei werden die vorgefertigten Ringe der Dichtelemente 36, 37, 38 derart verformt, daß sich das Material der Dichtelmente 36, 37, 38 an das Sensorelement 27 und das Gehäuse 12 anpreßt.

Es hat sich gezeigt, daß die Dichtwirkung im wesentlichen vom hexagonalen Bornitrid des zweiten Dichtelements 37 bestimmt wird. Das Bornitrid hat aufgrund seiner Kristallstruktur eine sehr gute Gas- und Kraftstoffdichtheit.

Wesentlich für die Erzielung einer Gas- und Kraftstoffdichtheit über einen weiten Temperaturbereich ist, daß auf die Dichtungsanordnung 35 ständig eine von der Metallhülse 40 ausgehende und auf die Dichtelemente 26, 37, 38 einwirkende Kraft vorliegt. Aufgrund des höheren thermischen Ausdehnungskoeffizienten von Steatit (8,8 x 10⁻⁶ K⁻¹) gegenüber Bornitrid (ca. 4,4 x 10⁻⁶ K⁻¹) wird erreicht, daß auch bei höheren Temperaturen die von der Metallhülse 40 ausgehende Anpreßkraft auf die Dichtungsanordnung 35 einwirkt.

Die Verwendung der Dichtungsanordnung 35 ist nicht auf die Abdichtung von planaren Sensorelementen in metallischen Gehäusen beschränkt. Es ist durchaus denkbar, eine derartige Dichtungsanordnung 35 auch zum Abdichten von sogenannten Fingersonden einzusetzen. Bei diesem Anwendungsfall muß dann lediglich die Ausführung der vorgefertigten Ringe für die Dichtelemente 36, 37, 38 der Geometrie der Längsbohrung und der Auflagefläche von Gehäuse und von fingerförmigen Sensorelement angepaßt werden.

## Patentansprüche

1. Gassensor, insbesondere zur Bestimmung des Sauerstoffgehalts in Abgasen von Verbrennungsmotoren, umfassend ein metallisches Gehäuse (12) mit einer Längsbohrung (15) und ein Sensorelement (27), wobei das Sensorelement (27) in der Längsbohrung (15) des Gehäuses (12) mittels einer Dichtanordnung (35) abgedichtet ist, wobei die Dichtanordnung (35) mindestens zwei übereinander liegende Dichtelemente (36, 37, 38) aufweist und das eine Dichtelement (36, 38) aus Steatit besteht, **dadurch gekennzeichnet, dass** das andere Dichtelement (36, 38) aus Bornitrid besteht.

2. Gassensor nach Anspruch 1, **dadurch gekennzeichnet, daß** das Bornitrid in einer hexagonalen Kristallstruktur vorliegt.

3. Gassensor nach Anspruch 1, **dadurch gekennzeichnet, daß** die Dichtelemente (36, 37, 38) als verformbare Ringe eingesetzt und in die Längsbohrung (15) des Gehäuses (12) eingepreßt sind, wobei sich beim Verpressen die Ringe derart verformen, daß sich das Material der Dichtelemente (36, 37, 38) an das Sensorelement (27) und das Gehäuse (12) anpreßt.

4. Gassensor nach Anspruch 1, **dadurch gekennzeichnet, daß** das Volumen des aus Steatit bestehenden Dichtelements (36, 38) größer ist als das Volumen des aus Bornitrid bestehenden Dichtelements (37).

5. Gassensor nach Anspruch 3, **dadurch gekennzeichnet, daß** das Volumen des aus Steatit bestehenden Dichtelements (36, 38) etwa doppelt so groß ist als das Volumen des aus Bornitrid bestehenden Dichtelements (37).

6. Gassensor nach Anspruch 1, **dadurch gekennzeichnet, daß** in der Längsbohrung (15) des Gehäuses (12) beabstandet voneinander ein meßgasseitiges Keramikformteil (21) und ein anschlußseitiges Keramikformteil (23) angeordnet sind und daß zwischen den beiden Keramikteilen (21, 24) die Dichtungsanordnung (35) angeordnet ist.

7. Gassensor nach Anspruch 6, **dadurch gekennzeichnet, daß** ein mit dem Gehäuse (12) verbundenes Druckelement (40) vorgesehen ist, welches auf das anschlußseitige Keramikformteil (23) drückt.

8. Dichtanordnung nach Anspruch 6, **dadurch gekennzeichnet, daß** auf dem meßgasseitigen Keramikformteil (21) das Dichtelement (36) aus Steatit aufliegt, auf dem sich das Dichtelement (37) aus Bornitrid befindet, und daß auf dem Dichtelement (37) aus Bornitrid ein weiters Dichtelement (38) aus Steatit liegt, auf das das anschlußseitige Keramikformteil (23) drückt.

9. Gassensor nach Anspruch 6, **dadurch gekennzeichnet, daß** auf dem meßgasseitigen Keramikformteil (21) das Dichtelement (37) aus Bornitrid aufliegt und daß sich über dem Dichtelement (37) das Dichtelement (38) aus Steatit befindet, auf das das anschlußseitige Keramikformteil (23) drückt.

10. Gassensor nach Anspruch 6, **dadurch gekennzeichnet, daß** auf dem meßgasseitigen Keramikformteil (21) das Dichtelement (36) aus Steatit aufliegt und daß sich über dem Dichtelement (36) das Dichtelement (37) aus Bornitrid befindet, auf das das anschlußseitige Keramikformteil (23) drückt.

## Claims

1. Gas sensor, in particular for determining the oxygen content in exhaust gases from internal combustion engines, having a metallic housing (12) with a longitudinal hole (15) and having a sensor element (27), with the sensor element (27) being sealed in the longitudinal hole (15) in the housing (12) by means of a sealing arrangement (35), with the sealing arrangement (35) having at least two sealing elements (36, 37, 38) which are located one above the other, and one sealing element (36, 38) being composed of steatite, **characterized in that** the other sealing element (36, 38) is composed of boron nitride.

2. Gas sensor according to Claim 1, **characterized in that** the boron nitride has a hexagonal crystal structure.

3. Gas sensor according to Claim 1, **characterized in that** the sealing elements (36, 37, 38) are inserted as deformable rings and are pressed into the longitudinal hole (15) in the housing (12), with the rings being deformed while being pressed in such a way that the material of the sealing elements (36, 37, 38) presses against the sensor element (27) and the housing (12).

4. Gas sensor according to Claim 1, **characterized in that** the volume of the sealing element (36, 38) which is composed of steatite is larger than the volume of the sealing element (37) which is composed of boron nitride.

5. Gas sensor according to Claim 3, **characterized in that** the volume of the sealing element (36, 38) which is composed of steatite is approximately twice as great as the volume of the sealing element (37) which is composed of boron nitride.

6. Gas sensor according to Claim 1, **characterized in that** a ceramic moulding (28) on the measurement gas side and a ceramic moulding (23) on the connection side are arranged at a distance from one another in the longitudinal hole (15) in the housing (12), and **in that** the sealing arrangement (35) is arranged between the two ceramic parts (21, 24).

7. Gas sensor according to Claim 6, **characterized in that** a pressing element (40) is provided, is connected to the housing (12) and presses against the ceramic moulding (23) on the connection side.

8. Sealing arrangement according to Claim 6, **characterized in that** the sealing element (36) composed of steatite rests on the ceramic moulding (21) on the measurement gas side, on which the sealing element (37) composed of boron nitride is located, and **in that** a further sealing element (38) composed of steatite is located on the sealing element (37) composed of boron nitride, against which the ceramic moulding (23) on the connection side presses.

9. Gas sensor according to Claim 6, **characterized in that** the sealing element (37) composed of boron nitride rests on the ceramic moulding (21) on the measurement gas side, and **in that** the sealing element (38) composed of steatite, against which the ceramic moulding (23) on the connection side presses, is located above the sealing element (37).

10. Gas sensor according to Claim 6, **characterized in that** the sealing element (36) composed of steatite rests on the ceramic moulding (21) on the measurement gas side, and **in that** the sealing element (37) composed of boron nitride, against which the ceramic moulding (23) on the connection side presses, is located above the sealing element (36).

## Revendications

1. Détecteur de gaz, notamment pour déterminer la teneur en oxygène dans les gaz d'échappement de moteurs à combustion interne, comprenant un boîtier métallique (12) doté d'un alésage longitudinal (15) et d'un élément de capteur (27), l'élément de capteur (27) étant étanché dans l'alésage longitudinal (15) du boîtier (12) à l'aide d'un dispositif étanche (35), le dispositif étanche (35) présentant au moins deux éléments étanches (36, 37, 38) se chevauchant dont l'un des éléments étanches (36, 38) est en stéatite,
**caractérisé en ce que**
l'autre élément étanche (36, 38) se compose de nitrure de bore.

2. Détecteur de gaz selon la revendication 1,
**caractérisé en ce que**
le nitrure de bore se présente dans une structure cristalline hexagonale.

3. Détecteur de gaz selon la revendication 1,
**caractérisé en ce que**
les éléments étanches (36, 37, 38) sont employés sous forme d'anneaux déformables et emmanchés dans l'alésage longitudinal (15) du boîtier (12), les anneaux se déformant lors du pressage de façon à comprimer la matière des éléments étanches (36, 37, 38) contre l'élément de capteur (27) et le boîtier (12).

4. Détecteur de gaz selon la revendication 1,
**caractérisé en ce que**
le volume de l'élément étanche (36, 38) en stéatite est supérieur à celui de l'élément étanche (37) en nitrure de bore.

5. Détecteur de gaz selon la revendication 3,
**caractérisé en ce que**
le volume de l'élément étanche (36, 38) en stéatite est environ le double de celui de l'élément étanche en nitrure de bore (37).

6. Détecteur de gaz selon la revendication 1,
**caractérisé en ce qu'**
un préformé en céramique (21) côté gaz de mesure et un autre (23) côté raccordement sont disposés en étant espacés l'un de l'autre dans l'alésage longitudinal (15) du boîtier (12) et le dispositif d'étanchéité (35) est disposé entre les deux pièces en céramique (21, 24).

7. Détecteur de gaz selon la revendication 6,
**caractérisé en ce qu'**
un élément de pression (40) relié au boîtier (12) s'appuie sur le préformé en céramique (23) côté raccordement.

8. Dispositif d'étanchéité selon la revendication 6,
**caractérisé en ce que**
l'élément étanche (36) en stéatite sur lequel se trouve l'élément étanche (37) en nitrure de bore est posé sur le préformé en céramique (21) côté gaz de mesure, et un autre élément étanche (38) en stéatite sur lequel appuie le préformé en céramique (23) côté raccordement se trouve sur l'élément étanche (37) en nitrure de bore.

9. Détecteur de gaz selon la revendication 6,
**caractérisé en ce que**
l'élément étanche (37) en nitrure de bore se trouve sur le préformé en céramique (21) côté gaz de mesure, et l'élément étanche (38) en stéatite sur lequel appuie le préformé en céramique (23) côté raccordement se trouve au-dessus de l'élément étanche (37).

10. Détecteur de gaz selon la revendication 6,
**caractérisé en ce que**
l'élément étanche (36) en stéatite se trouve sur le préformé en céramique (21) côté gaz de mesure, et l'élément étanche (37) en nitrure de bore sur lequel appuie le préformé en céramique (23) côté raccordement se trouve au-dessus de l'élément étanche (36).
